# EUROPEAN PATENT SPECIFICATION

(11) **EP 0 583 510 B1**
(45) Date of publication and mention of the grant of the patent: **17.04.1996**
(21) Application number: 92202499.7
(22) Date of filing: 13.08.1992
(51) Int. Cl.: B62K 25/02, B60B 27/02

(54) **Hub assembly for a rear wheel axle of a bicycle**
Radnabenkonstruktion für eine Hinterradachse eines Fahrrads
Assemblage de moyeu pour un essieu arrière de bicyclette

(43) Date of publication of application: 23.02.1994
(73) Proprietor: Hsieh, Kinka, Feng Yuan City, Taichung Hsien (TW)
(72) Inventor: Hsieh, Kinka, Feng Yuan City, Taichung Hsien (TW)
(74) Representative: van der Saag, Johannes

(56) References cited:
- DE-U- 9 010 055
- DE-U- 9 012 293
- FR-A- 910 469
- FR-A- 2 333 655
- US-A- 5 024 121

## Description

The invention relates to a hub assembly with a rear wheel axle of a bicycle as described in the preamble of the claim.

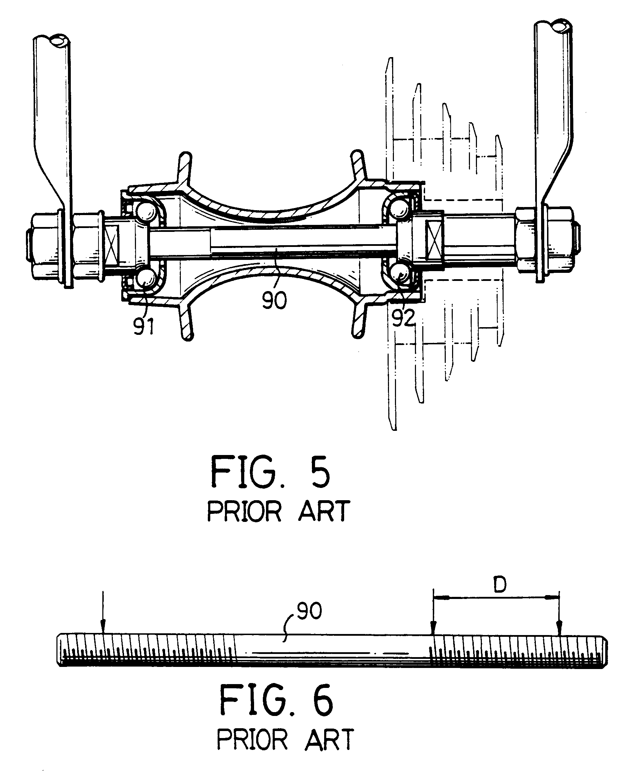

For multi-speed bicycles, a plurality of sprockets are engaged on one side of the hub assembly and extend outwards of the hub assembly. However, a conventional structure is shown in figs. 5 and 6, wherein a first bearing 91 is rotatably mounted on a first end portion of the hub assembly and is disposed close to a first end of the rear wheel axle 90, and a second bearing 92 which is rotatably mounted on a second end portion of the hub assembly is disposed close to a middle portion of the rear wheel axle 90 such that a distance "D" is defined between the second bearing 92 and a second end of the rear wheel axle 90, and such that a cantilever type support is formed and a large bending moment is thus formed. The rear wheel axle 90 thus cannot be stably supported, and the second bearing 92 will suffer a great burden such that the hub assembly will easily become loose.

The French Patent No. 910-469 to CHEFNEUX teaches a hub assembly in combination with a rear wheel axle which includes a first cone threadedly engaged on a first end thereof and a second cone engaged on a second end thereof, the hub assembly comprising a body rotatably engaged on the rear wheel axle and including a first end portion located close to the first cone of the rear wheel axle and a second end portion which is locate close to the second cone of the rear wheel axle and has a plurality of sprockets engaged thereon, a first bearing rotatably mounted between the first end portion of the body and the first cone, and a second bearing rotatably mounted between the second end portion and the second cone, whereby the first bearing and the second bearing are rotatably engaged on the first end and the second end of the rear wheel axle respectively so as to support the rear wheel axle.

However, by such an arrangement, a distance betweeen the first and second end portions of the body is too long, so having a tendency to create a great bending moment on the rear wheel axle, thereby easily deforming the construction of the rear wheel axle. In addition, only a certain type of sprocket cluster is suitable for being mounted on the second end portion of the body of the hub asssembly, thereby greatly limiting the development of products of the hub assembly in combination with the rear wheel axle.

The object of the present invention is to provide a hub assembly for stably supporting a rear wheel axle of the bicycle.

According to the invention there is provided a hub assembly with a rear wheel axle of a bicycle which includes a first cone threadedly engaged on a first end thereof and a second cone integrally formed on a second end thereof, said hub assembly comprisisng a body which is rotatably engaged on said rear wheel axle and includes a first end portion located close to said first cone of said rear wheel axle, characterized in that said body includes a second end portion having an outer thread formed thereon and located close to a middle portion of said rear wheel axle, a barrel integrally formed on said second end portion of said body and extending outwardly from said outer thread towards said second cone, a sleeve fixedly mounted around said barrel and having one end portion threadedly engaged on said outer thread of said body, a plurality of sprockets uni-directionally and rotatably engaged on said sleeve, a first bearing rotatably engaged between said first end portion of said body and said first cone, and a second bearing rotatably abutting against said second cone and including one end portion threadedly engaged in said barrel, whereby said first bearing and said second bearing are rotatably engaged on said first end and said second end of said rear wheel axle respectively such that said rear wheel axle is stably supported in place.
FIG. 1 is a perspective view of a hub assembly;
FIG. 2 is an exploded view of the hub assembly;
FIG. 3 is a cross sectional view of the hub assembly taken along lines 3-3 of FIG. 1;
FIG. 4 is a plane view illustrating the force distribution of the wheel axle;
FIG. 5 is a cross sectional view illustrating a conventional hub assembly for the rear wheel axle; and
FIG. 6 is a plane view illustrating the force distribution of the wheel axle shown in FIG. 5.

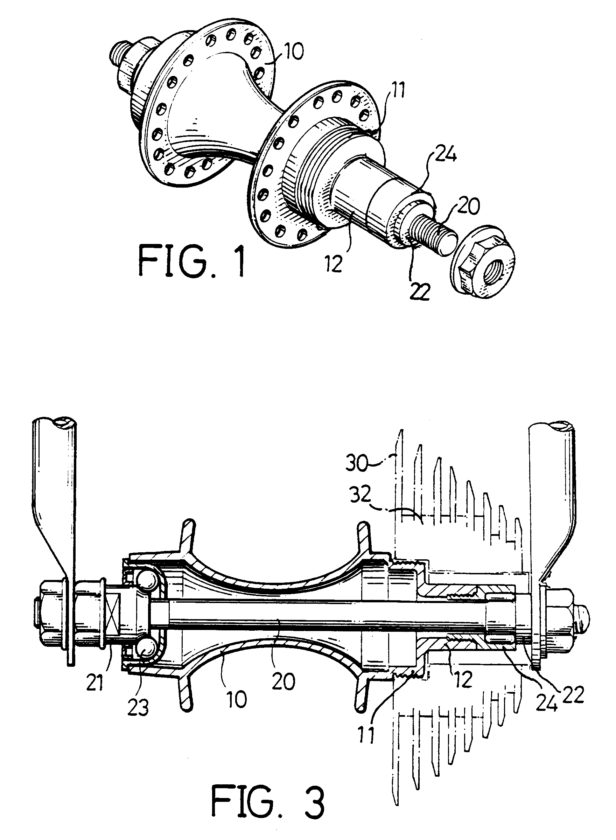

Referring to FIGS. 1, 2 and 3, a hub assembly provided for supporting the rear wheel axle of a multi-speed bicycle comprises a body 10 rotatably engaged on a rear wheel axle 20 having a first cone 21 threadedly engaged on a first end thereof and a second cone 22 formed integral on a second end thereof. A first bearing 23 is rotatably engaged between the first cone 21 and the first end of the body 10.

The body 10 includes a second end having an outer thread 11 formed thereon and located close to the middle portion of the rear wheel axle 20, and a barrel 12 formed integral on the second end thereof and extended outward toward the second cone 22. A second bearing 24 is rotatably engaged between the second cone 22 and coupled to the free end portion of the barrel 12 by threaded engagement or by force-fitted engagement. As shown in FIG. 3, a plurality of sprockets 30 of different sizes are unidirectionally and rotatably engaged on a sleeve 32 which has one end portion threadedly engaged on the outer thread 11 of the body 10. The sprockets 30 and the sleeve 32 are commercially available and will not be described in further details.

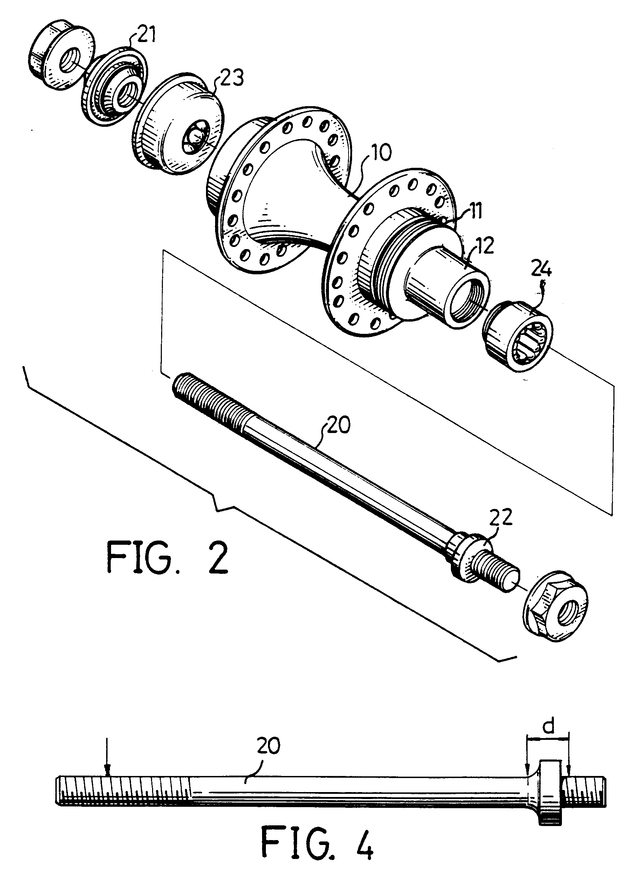

It is to be noted that the bearing 24 is located close to the second end of the wheel axle 20, such that the distance "d", as shown in FIG. 4, is greatly reduced as compare with the distance "D" shown in FIG. 6, such that the bending moment is greatly reduced.

Accordingly, the hub assembly includes a pair of bearings 23, 24 rotatably engaged on the end portions of the rear wheel axle 20 respectively, such that the rear wheel axle 20 can be stably supported in the hub assembly.

## Claims

1. A hub assembly with a rear wheel axle (20) of a bicycle which includes a first cone (21) threadedly engaged on a first end thereof and a second cone (22) integrally formed on a second end thereof, said hub assembly comprising a body (10) which is rotatably engaged on said rear wheel axle (20) and includes a first end portion located close to said first cone (21) of said rear wheel axle (20), characterized in that said body (10) includes a second end portion having an outer thread (11) formed thereon and located close to a middle portion of said rear wheel axle (20), a barrel (12) integrally formed on said second end portion of said body (10) and extending outwardly from said outer thread (11) towards said second cone (22), a sleeve (32) fixedly mounted around said barrel (12) and having one end portion threadedly engaged on said outer thread (11) of said body (10), a plurality of sprockets (30) uni-directionally and rotatably engaged on said sleeve (32), a first bearing (23) rotatably engaged between said first end portion of said body (10) and said first cone (21), and a second bearing (24) rotatably abutting against said second cone (22) and including one end portion threadedly engaged in said barrel (12), whereby said first bearing (21) and said second bearing (24) are rotatably engaged on said first end and said second end of said rear wheel axle (20) respectively such that said rear wheel axle (20) is stably supported in place.

## Patentansprüche

1. Radnabkonstruktion mit einer Hinterradachse (20) eines Fahrrades, die einen an einem ersten Ende derselben angeschraubten ersten Konus (21) und einen an einem zweiten Ende derselben integral ausgebildeten zweiten Konus (22) umfaßt, wobei die Radnabenkonstruktion einen Körper (10) umfaßt, der drehbeweglich auf der Hinterradachse (20) angeordnet ist und ein nahe dem ersten Konus (21) der Hinterradachse (20) angeordnetes erstes Endteil umfaßt, **gekennzeichnet dadurch**, daß der Körper (10) umfaßt ein zweites Endteil, das ein daran ausgebildetes und nahe einem Mittelteil der Hinterradachse (20) angeordnetes Außengewinde (11) besitzt, eine an dem zweiten Endteil des Körpers (10) integral ausgebildete und sich von dem Außengewinde (11) nach außen zu dem zweiten Konus (22) erstreckende Trommel (12), eine Hülse (32), die um die Trommel (12) herum starr befestigt und mit einem Endteil auf das Außengewinde (11) des Körpers (10) geschraubt ist, eine Vielzahl von einseitig gerichteten und drehbeweglich an der Hülse (32) angeordneten Kettenrädern (30), ein erstes, zwischen dem ersten Endteil des Körpers (10) und dem ersten Konus (21) drehbeweglich angeordnetes Lager (23) und ein zweites Lager (24), das drehbeweglich an den zweiten Konus (22) angrenzt und ein Endteil umfaßt, das in die Trommel (12) geschraubt ist, wobei das erste Lager (21) und das zweite Lager (24) an dem ersten Ende bzw. dem zweiten Ende der Hinterradachse (20) drehbeweglich angeordnet ist, so daß die Hinterradachse (20) stabil festgehalten wird.

## Revendications

1. Ensemble formant moyeu muni d'un axe (20) de roue arrière de bicyclette, qui comprend un premier cône (21) vissé sur une première extrémité de cet axe et un second cône (22) faisant corps avec une seconde extrémité de cet axe, ledit ensemble formant moyeu comprenant un corps (10) qui est monté de façon tournante sur ledit axe (20) de roue arrière et comprend une première partie d'extrémité située près dudit premier cône (21) dudit axe (20) de roue arrière, caractérisé en ce que ledit corps (10) comprend une seconde partie d'extrémité pourvue d'un filetage extérieur (11) qui y est formé et qui est situé près d'une partie médiane dudit axe (20) de roue arrière, une douille (12) faisant corps avec ladite seconde partie d'extrémité dudit corps (10) et s'étendant vers l'extérieur depuis ledit filetage extérieur (11) en direction dudit second cône (22), un manchon (32) monté fixement autour de ladite douille (12) et dont une des extémités est vissée sur ledit filetage extérieur (11) dudit corps (10), une pluralité de roues à chaîne (30) montées de façon unidirectionnelle et tournante sur ledit manchon (32), un premier roulement (23) monté de façon tournante entre ladite première partie d'extrémité dudit corps (10) et ledit premier cône (21), et un second roulement (24) portant de façon tournante contre ledit second cône (22) et dont une des extrémités est vissée dans ladite douille (12), grâce à quoi ledit premier roulement (21) et ledit second roulement (24) sont montés de façon tournante sur ladite première extrémité et sur ladite seconde extrémité dudit axe (20) de roue arrière, respectivement, de sorte que ledit axe (20) de roue arrière est maintenu en place de façon stable.
